# EUROPÄISCHE PATENTSCHRIFT

(11) **EP 1 366 942 B1**
(45) Veröffentlichungstag und Bekanntmachung des Hinweises auf die Patenterteilung: **14.07.2010**
(21) Anmeldenummer: 03011869.9
(22) Anmeldetag: 27.05.2003
(51) Int. Cl.: B60J 7/12

(54) **Verdeckstoffbefestigung für ein Cabriolet**
Fixation for canvas top for convertible vehicle
Fixation de capote pour véhicule convertible

(30) Priorität: 31.05.2002 DE 10224095
(43) Veröffentlichungstag der Anmeldung: 03.12.2003
(73) Patentinhaber: Bayerische Motoren Werke Aktiengesellschaft, 80809 München (DE)
(72) Erfinder: Brunner, Konrad, 85107 Baar Ebenhausen (DE); Spöckner, Ludwig, 84094 Elsendorf (DE)

(56) Entgegenhaltungen:
- EP-A- 0 502 320
- WO-A-00/54998
- DE-A- 19 750 418
- DE-B- 1 192 529
- US-A- 3 090 646
- US-A- 3 122 394
- US-A- 5 979 968
- US-A- 6 120 087

## Beschreibung

Die Erfindung betrifft eine Verdeckstoffbefestigung für ein Cabriolet, mit den im Oberbegriff des Patentanspruches 1 angegebenen Merkmalen.

Eine derartige Verdeckstoffbefestigung ist in der US 5,765,903 und auch in der US-A-5 979 968 verwendet, in dem die mit dem Verdeckstoff verbundene Befestigungsleiste in einen Aufnahmeraum einer an der Karosserie des Cabriolets befestigten Stützleiste bis in eine Rastlage einsteckbar ist. Ein Einstecken der Befestigungsleiste in den Aufnahmeraum ist nur möglich, wenn sich dabei ein Bereich der Befestigungsleiste oder der Stützleiste elastisch verformt. Durch den elastischen Bereich der Befestigungsleiste oder der Stützleiste ist der Verdeckstoff bei geschlossenem Verdeck nicht stabil festgehalten. Das den elastischen Bereich aufweisende Teil, die Befestigungsleiste oder die Stützleiste, kann nicht gekrümmt verlaufen, da sich sonst der elastische Bereich nicht elastisch verformen kann. Mit dieser Befestigung kann der Verdeckstoff lediglich über etwa gerade verlaufende Bereiche oder lediglich an einzelnen Stützstellen in einem gekrümmten Verdeckbereich gestützt werden.

Der Erfindung liegt die Aufgabe zu Grunde, eine Verdeckstoffbefestigung für ein Cabriolet anzugeben, mit der eine stabile Abstützung des Verdeckstoffes auch in gekrümmten Bereichen möglich ist und die lediglich einen geringen Montageaufwand erfordert.

Diese Aufgabe ist durch die im Patentanspruch 1 angegebenen Merkmale gelöst. Vorteilhafte Ausgestaltungen der Erfindung sind den Unteransprüchen entnehmbar. Mit der doppelten Abstützung des Verdeckstoffes einerseits an der Stützleiste und andererseits der Stützleiste an der Karosserie des Cabriolets ist der Verdeckstoff besonders einfach zu befestigen. Beispielsweise kann eine mit dem Verdeckstoff verbundene Befestigungsleiste in einen Aufnahmeraum der noch nicht montierten Stützleiste eingesteckt und zunächst das eine Stützleistenaufnahme bildende Stützteil mit der Karosserie des Cabriolets lösbar oder unlösbar verbunden werden. Anschließend kann durch einfaches Einstecken der Befestigungsleiste in die Stützleistenaufnahme im Stützteil ein selbsttätiges oder manuell bewirktes Verrasten oder Verriegeln der Stützleiste durch die Halteeinrichtung erfolgen, wodurch die Stützleiste montiert ist und der Verdeckstoff an der Karosserie stabil befestigt sowie über beispielsweise seine gesamte, eventuell gekrümmte Länge gestützt ist. Die Befestigungsleiste kann steif ausgebildet sein, wodurch eine besonders stabile Abstützung des Verdeckstoffes erreicht wird. Es können mehrere Stützteile lediglich an Stellen vorgesehen sein, die bei der Montage oder Demontage der Verdeckstoffbefestigung schwer oder nicht zugänglich sind. Beispielsweise an anderen, bei der Montage oder Demontage der Verdeckstoffbefestigung zugänglichen Stellen kann die Stützleiste zusätzlich über vorzugsweise lösbare Befestigungsmittel wie Schrauben oder dergleichen oder unlösbare Befestigungsmittel, beispielsweise Nieten, mit der Karosserie des Cabriolets oder daran befestigten oder abgestützten Teilen verbunden sein.

Vier Ausführungsbeispiele der Erfindung werden anhand einer Zeichnung näher erläutert. Es zeigen
- Fig. 1: ein erstes Ausführungsbeispiel in einem Querschnitt durch einen Ka- rosserieseitenbereich,
- Fig. 2: ein zweites Ausführungsbeispiel in einer Figur 1 entsprechenden Ansicht,
- Fig. 3: das in Figur 2 dargestellte Ausführungsbeispiel in einem anderen Querschnitt
- Fig. 4: einen Seitenbereich der in Figur 1 dargestellten Stützleiste,
- Fig. 5: ein drittes Ausführungsbeispiel, in einer Figur 1 entsprechenden Ansicht,
- Fig. 6: das in Figur 5 dargestellte Ausführungsbeispiel in einem anderen Querschnitt und
- Fig. 7: ein viertes Ausführungsbeispiel in einer Figur 1 entsprechenden An- sicht, mit einer manuell verriegelbaren Halteeinrichtung.

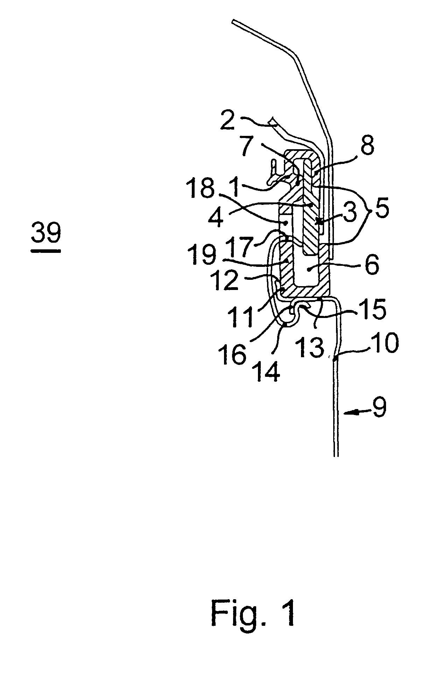

Das in Figur 1 in einem Querschnitt durch einen Karosserieseitenbereich des Cabriolets dargestellte erste Ausführungsbeispiel einer Verdeckstoffbefestigung weist eine mit dem Verdeckstoff 2 des Cabriolets an einer Nahtstelle 3 vernähte Befestigungsleiste 4 auf. Vor der Montage der festen Stützleiste 1, die in Draufsicht U-förmig ausgebildet und beispielsweise aus einem Aluminium-Strangpressprofil gefertigt ist, wird die Befestigungsleiste 4 durch eine seitlich äußere Einstecköffnung 5 in der Stützleiste 1 in einen inneren Aufnahmeraum 6 in der Stützleiste 1 eingesteckt und soweit nach oben geschoben, bis der obere Rand der Befestigungsleiste 4 am oberen Ende des Aufnahmeraumes 6 anliegt. Durch die U-förmige und feste Ausbildung der Stützleiste 1 ist es erforderlich, dass sich die Befestigungsleiste 4 zumindest über ihre Länge elastisch krümmen kann. In den Querrichtungen zur Längsachse kann die Stützleiste 1 steif oder weniger elastisch ausgebildet sein. In der Stützlage ist die Befestigungsleiste 4 seitlich mit geringem Spiel zwischen einer von der Innenseite der Stützleiste 1 nach innen gerichteten Nase 7 und einem oberen seitlichen Randbereich 8 der Stützleiste 1 angeordnet bzw. bereits bei einer geringen Zugbelastung des Verdeckstoffes 2 durch die dabei auftretenden Kantenbelastungen festgeklemmt.

An einer inneren Seitenwand 10 der Karosserie 9, die einem an der Karosserie ausgebildeten Stützteil entspricht, ist eine Stützleistenaufnahme 11 ausgebildet, die von oben über eine Eintrittsöffnung 12 zugänglich. Zur Befestigung der mit der Befestigungsleiste 4 verbundenen Stützleiste 1 an der Karosserie 9 des Cabriolets, beispielsweise an unzugänglichen oder schwer zugänglichen Stellen, wird die Stützleiste 1 von oben jeweils über eine Eintrittsöffnung 12 in die Stützleistenaufnahme 11 bis in eine Stützlage eingesteckt, in der die Stützleiste 1 jeweils am Boden 13 der Stützleistenaufnahme 11 anliegt. Anschließend wird die Stützleiste 1 über jeweils einen C-förmigen Federbügel 14 in die Stützleistenaufnahme 11 belastet. Dazu hintergreift ein Ende 15 des Federbügels 14 eine Stützschulter 16 am Boden 13. Nach einem manuellen elastischen Aufweiten des Federbügels 14, wird das andere Ende 17 des Federbügels 14 in eine Einhängeöffnung 18 beispielsweise in einer inneren Seitenwand 19 der Stützleiste 1 eingehängt. Die bei der Montage bzw. Demontage der Verdecksstoffbefestigung schwer zugänglichen Stellen, an denen jeweils ein Federbügel 14 oder dergleichen die Stützleiste 1 in die Stützleistenaufnahme 11 belastet, befinden sich beispielsweise im Bereich der in Einbaulage nach vorne gerichteten Schenkelenden der U-förmigen Stützleiste 1. An anderen Stellen, die besser zugänglich sind, kann die Stützleiste 1 über andere Befestigungsmittel wie beispielsweise Schrauben oder Nieten, vorzugsweise lösbar oder unlösbar zusätzlich an der Karosserie 9 oder an einem daran abgestützten oder befestigten Teil fixiert sein. Die Einstecköffnung 5 weist in dem nach außen gerichteten Seitenbereich der Stützleiste 1 eine Erstreckung in der etwa vertikalen Spannrichtung 40 des Verdeckstoffes 2 auf, dass sich die Befestigungsleiste 4 zumindest in einer Schräglage entgegen der Spannrichtung des Verdeckstoffes 2 bei montierter oder noch nicht montierter Stützleiste 1 in den Aufnahmeraum 6 der Stützleiste 1 einbringen lässt und nach einer Verstellbewegung der Befestigungsleiste 4 im Aufnahmeraum 6 in Spannrichtung des Verdeckstoffes 2 nicht oder nicht ohne weiteres aus dem Aufnahmeraum 6 entfernen lässt.

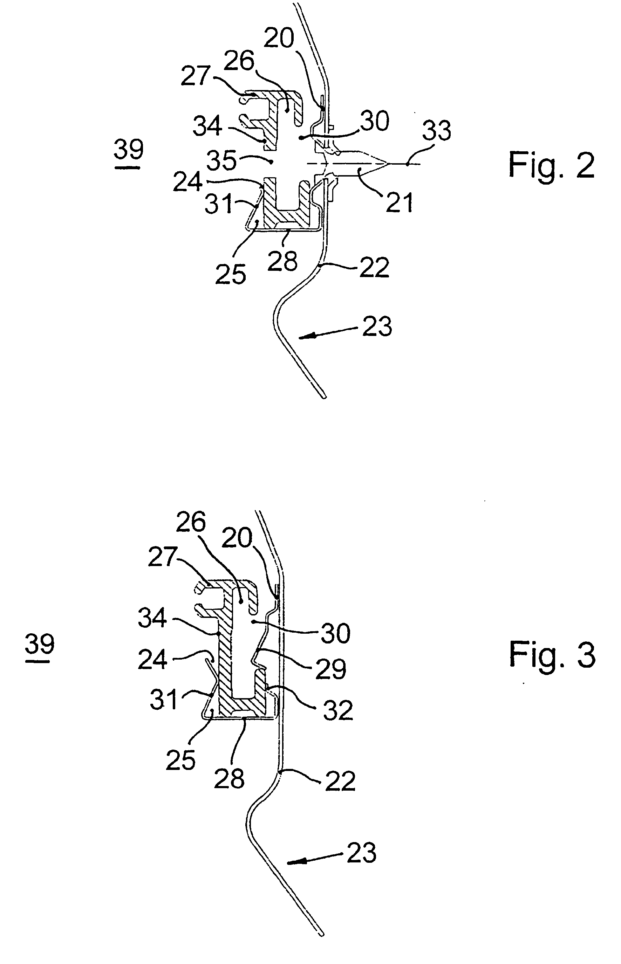

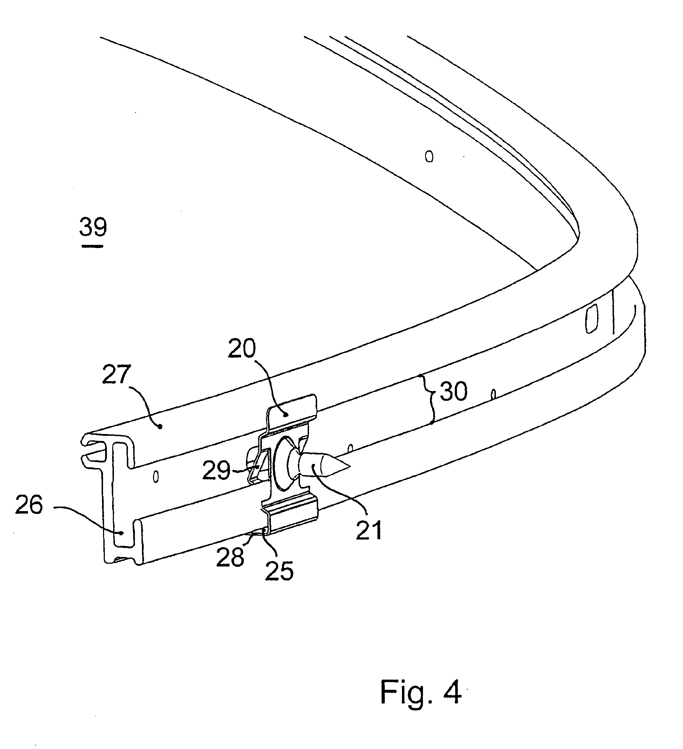

Ein zweites, in den Figuren 2 bis 4 dargestelltes Ausführungsbeispiel ist ähnlich wie das erste Ausführungsbeispiel gebildet. Zur Vermeidung einer wiederholten Beschreibung sind die mit dem ersten Ausführungsbeispiel vergleichbaren Bauteile mit gleichen Bezugszahlen und in den Figuren 2 bis 4 zur besseren Unterscheidung teilweise mit einem hochgestellten Zeichen versehen. Zur Vereinfachung der Darstellung sind in den Figuren 2 bis 4 der verwendete Verdeckstoff sowie die damit verbundene Befestigungsleiste nicht dargestellt. Bei dem zweiten Ausführungsbeispiel sind mehrere Stützteile 20 verwendet, die über jeweils eine Schraube 21 mit einer inneren Seitenwand 22 der Karosserie 23 des Cabriolets lösbar verbunden sind. Jedes Stützteil 20 bildet eine Stützleistenaufnahme 25, die über eine obere Eintrittsöffnung 24 zugänglich ist. Nach dem Einbringen der mit dem Verdeckstoff verbundenen, nicht dargestellten Befestigungsleiste in den Aufnahmeraum 26 bis in eine Stützlage, liegt die Stützleiste 27 von oben am Boden 28 der Stützleistenaufnahme 25 an und ist selbsttätig von einem elastischen Rastelement 29 vor einer Rückverlagerung aus der Stützleistenaufnahme 25 heraus gesichert. Bei der Annäherung der Stützleiste 27 an die Stützlage weicht das Rastelement im Zusammenwirken mit der Stützleiste 27 elastisch zurück. Wenn die Stützleiste 27 ihre Stützlage erreicht hat, ist das Rastelement 29 freigegeben, das sich dann unter seiner Vorspannkraft selbsttätig vor den unteren Randbereich der seitlich in den Aufnahmeraum 26 mündenden Einstecköffnung 30 in der Stützleiste 27 verstellt und dadurch eine Rückverlagerung der Stützleiste 27 aus der Stützleistenaufnahme 25 verhindert.

Der Aufnahmeraum 26 im Stützteil 20 ist seitlich innen von einer elastischen Seitenwand 31 begrenzt, die einen Toleranzausgleich ermöglicht. Die gegenüberliegende äußere Seitenwand 32 kann ebenfalls seitlich elastisch ausgebildet sein. Bei der beschriebenen Ausführung ist die Seitenwand 32 seitlich weniger elastisch als die Seitenwand 31 ausgebildet. Um bei der Montage oder Demontage der Verdeckstoffbefestigung an der Schraube 21 über ein Werkzeug um die Schraubenachse 33 ein Drehmoment bewirken zu können, ist dem Schraubenkopf gegenüberliegend an der Innenseite 34 der Stützleiste 27 eine Durchtrittsöffnung 35 für das Werkzeug ausgebildet. Der Aufnahmeraum 26 der Stützleiste 27 erstreckt sich über die gesamte U-förmige Länge der Stützleiste 27. Die in den Aufnahmeraum 26 mündende Einstecköffnung 30 ist auf der dem Fahrgastraum 39 abgewandten Außenseite der Stützleiste 27 ausgebildet.

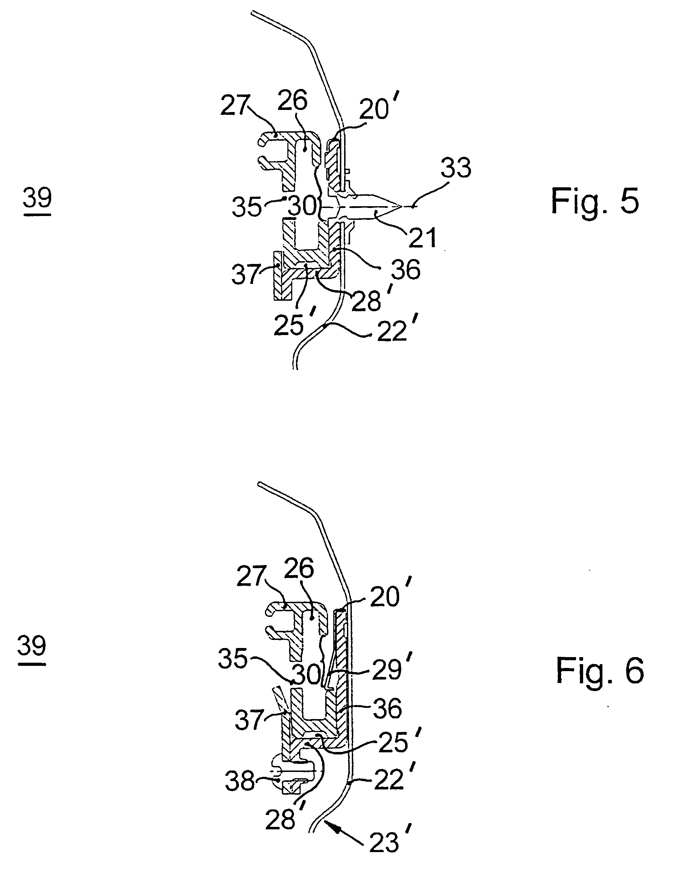

Das in den Figuren 5 und 6 dargestellte dritte Ausführungsbeispiel ist ähnlich wie das zweite Ausführungsbeispiel gemäß den Fig. 2 bis 4 ausgeführt. Zur Vermeidung einer wiederholten Beschreibung sind die bei diesen Ausführungsbeispielen gleichen oder vergleichbaren Bauteile jeweils mit einer gleichen Bezugszahl und teilweise zur besseren Unterscheidung mit einem hochgestellten Zeichen versehen. Die bei dem dritten Ausführungsbeispiel verwendete Stützleistenaufnahme 25' ist von zwei Bauteilen, einem über die Schraube 21 mit der Seitenwand 22' der Karosserie verbindbaren Haltewinkel 36 und seitlich innen von einer Stützplatte 37 begrenzt, die über ein lösbares oder unlösbares Befestigungsmittel, beispielsweise der Schraube 38, mit der Stützplatte 37 verbunden ist. Das die Stützleistenaufnahme 25' bildende Stützteil 20' ist im Wesentlichen durch den Haltewinkel 36 und die Stützplatte 37 sowie das Rastelement 29' gebildet, das in nicht dargestellter Weise fest oder lösbar mit dem Haltewinkel 36 verbunden ist.

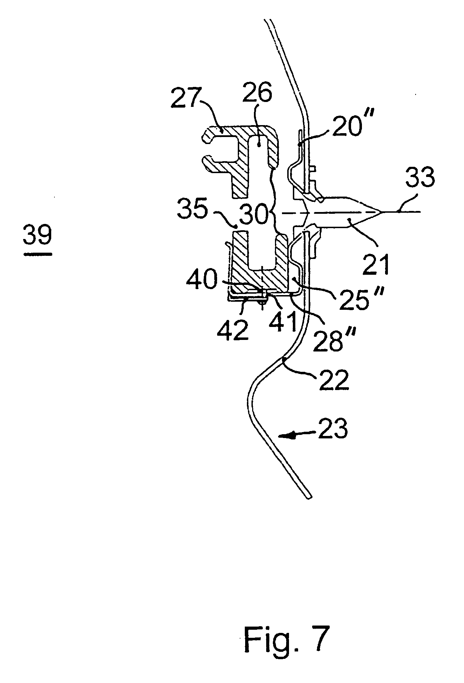

Das in Fig. 7 dargestellte vierte Ausführungsbeispiel ist ähnlich wie die in den Figuren 2 bis 6 dargestellten Ausführungsbeispiele 2 und 3 gebildet. Zwischen diesen Ausführungsbeispielen vergleichbare Bauteile sind zur Vermeidung einer wiederholten Beschreibung mit einer gleichen Bezugszahl und teilweise zur besseren Unterscheidung mit einem hochgestellten Zeichen versehen. Bei dem vierten Ausführungsbeispiel gemäß Figur 7 weist die Halteeinrichtung, die nach dem Einstecken der Stützleiste 27 in die Stützleistenaufnahme 25" die Stützleiste 27 in der Stützleistenaufnahme 25 festhält, einen von der Unterseite der Stützleiste 27 nach unten abstehenden Bolzen 40 auf. Dieser durchdringt in der dargestellten Stützlage der Stützleiste 27 eine Durchtrittsöffnung 41 im Boden 28" des Stützteiles 20". Ein beispielsweise an der Innenseite des Stützteiles 20" befestigtes elastisches Rastelement 42 kann unter dem Boden 28" des Stützteiles 20" in eine Rast- oder Sperrausnehmung am Bolzen 40 selbsttätig oder durch manuelles Verstellen eingreifen, wodurch sich der Bolzen 40 nicht aus der Durchtrittsöffnung 41 entfernen lässt und somit die Stützleiste 27 in der Stützleistenaufnahme festgehalten bleibt. Durch manuelles Entfernen des Rastelements 42 aus der Rast- oder Sperrausnehmung ist der Bolzen 40 freigegeben. Danach kann die Stützleiste 27 aus der Stützleistenaufnahme 25" entfernt werden.

Der Verdeckstoff kann lösbar oder unlösbar mit der Stützleiste verbunden oder zu verbinden sein. Ebenso kann der Verdeckstoff mit einer Befestigungsleiste lösbar oder unlösbar verbunden sein, die mit der Stützleiste lösbar oder unlösbar verbunden oder zu verbinden ist. Die Halteeinrichtung kann ein manuell oder selbsttätig wirkendes, nach der Montage lösbares oder unlösbares Rast- oder Riegelelement aufweisen, das die in der Stützlage befindliche Stützleiste kraft- oder formschlüssig fixiert. Das Material und die Form der verwendeten Bauteile sind weitgehend frei wählbar. Das Einbringen der Befestigungsleiste in den Aufnahmeraum der Stützleiste kann auch nach der Montage der Stützleiste an der Karosserie des Cabriolets erfolgen.

## Patentansprüche

1. Verdeckstoffbefestigung für ein Cabriolet, mit einem Verdeckstoff, der mit einer Stützleiste verbunden oder zu verbinden ist, die an der Karosserie des Cabriolets zu befestigen ist, **dadurch gekennzeichnet, dass** die Stützleiste (1, 27) über eine Eintrittsöffnung (12, 24) in eine Stützleistenaufnahme (11, 25, 25', 25") eines an der Karosserie (23, 23') befestigten oder ausgebildeten Stützteiles (10, 20, 20', 20") bis in eine Stützlage einsteckbar ist, in der eine Halteeinrichtung (14, 29, 29', 42) die Stützleiste (1, 27) gegenüber dem Stützteil (20, 20', 20") oder der Karosserie (9) des Cabriolets festhält.

2. Verdeckstoffbefestigung nach Anspruch 1, **dadurch gekennzeichnet, dass** der Verdeckstoff (2) mit einer Befestigungsleiste (4) lösbar oder unlösbar verbunden ist, die über eine Einstecköffnung (5, 30) in einen Aufnahmeraum (6, 26) der Stützleiste (1, 27) einsteckbar und eingesteckt mit der Stützleiste (1, 27) verbunden ist.

3. Verdeckstoffbefestigung nach Anspruch 1 oder 2, **dadurch gekennzeichnet, dass** die Halteeinrichtung ein elastisches Federelement (14) aufweist, das sich so einerseits an einer Anlagefläche oder -kante der Stützleiste (1) und andererseits an einer Stützfläche oder -kante des Stützteiles (16) oder der Karosserie (9) abstützen kann, dass durch die elastische Spannkraft des Federelements (14) die Stützleiste (1) in die Stützlage in der Stützleistenaufnahme (11) belastet ist.

4. Verdeckstoffbefestigung nach Anspruch 3, **dadurch gekennzeichnet, dass** das Federelement ein etwa C-förmiger Federbügel (14) ist.

5. Verdeckstoffbefestigung nach einem der Ansprüche 1 bis 4, **dadurch gekennzeichnet, dass** die Halteeinrichtung einen von der Stützleiste (27) abstehenden Bolzen (40) aufweist, der in der Stützlage eine Durchtrittsöffnung (41) im Stützteil (20") durchdringt und ein separates oder an dem Stützteil (20") oder an der Stützleiste oder an der Karosserie verstellbar angeordnetes Rast- (42) oder Riegelelement in der Stützlage mit dem Bolzen (40) zusammenwirkend die Stützleiste (27) in der Stützleistenaufnahme (25") des Stützteiles (27) festhält.

6. Verdeckstoffbefestigung nach einem der Ansprüche 1 bis 5, **dadurch gekennzeichnet, dass** in der Stützlage ein separates oder an der Stützleiste oder an dem Stützteil (20, 20') oder an der Karosserie oder dergleichen verstellbar angeordnetes Riegelelement oder elastisches Rastelement (29, 29') so vor eine Stützschulter an dem anderen Teil, der Karosserie oder dem Stützteil oder der Stützleiste (27), verstellbar oder selbsttätig verstellt ist, dass die Stützleiste (27) kraft- und/oder formschlüssig in der Stützleistenaufnahme (25, 25') des Stützteiles (20, 20') festgehalten ist.

7. Verdeckstoffbefestigung nach einem der Ansprüche 1 bis 6, **dadurch gekennzeichnet, dass** die Eintrittsöffnung (24) in einen Aufnahmeraum (25) in der Karosserie oder im Stützteil (20) mündet, der seitlich von wenigstens einer elastischen Seitenwand (31,32) begrenzt ist.

8. Verdeckstoffbefestigung nach einem der Ansprüche 1 bis 7, **dadurch gekennzeichnet, dass** die Eintrittsöffnung in eine Stützleistenaufnahme (25') in der Karosserie oder im Stützteil (27) mündet, die von wenigstens zwei Bauteilen (36, 37) begrenzt ist, die fest oder lösbar miteinander verbunden sind.

9. Verdeckstoffbefestigung nach einem der Ansprüche 1 bis 8, **dadurch gekennzeichnet, dass** die Stützleiste (27) in Draufsicht U-förmig ausgebildet ist und die seitlichen Schenkel der Stützleiste (27) in der Stützlage in Längsrichtung des Cabriolets nach vorne gerichtet sind.

10. Verdeckstoffbefestigung nach einem der Ansprüche 1 bis 9, **dadurch gekennzeichnet, dass** sich die Stützleistenaufnahme (11, 25, 25', 25") in der Stützleiste (1, 27) über die Länge der Stützleiste (1, 27) erstreckt und die in die Stützleistenaufnahme (11, 25. 25', 25") mündende Eintrittsöffnung (12, 24) auf der dem Fahrgastraum abgewandten Außenseite der Stützleiste (1, 27) ausgebildet ist.

11. Verdeckstoffbefestigung nach einem der Ansprüche 1 bis 10, **dadurch gekennzeichnet, dass** die Einstecköffnung (5, 30) in einem Seitenbereich der Stützleiste (1, 27) eine Erstreckung in Spannrichtung des Verdeckstoffes (2) aufweist, dass sich die Befestigungsleiste (4) in einer Schräglage entgegen der Spannrichtung des Verdeckstoffes (2) bei montierter oder noch nicht montierter Stützleiste (1, 27) in den Aufnahmeraum (6, 26) einbringen lässt und nach einer Verstellbewegung der Befestigungsleiste (4) im Aufnahmeraum (6, 26) in Spannrichtung des Verdeckstoffes (2) nicht oder nicht ohne weiteres aus dem Aufnahmeraum (6, 26) entfernen lässt.

## Claims

1. A convertible top material or hood material fastener for a convertible, comprising a hood material connected or connectable to a supporting strip for fastening to the convertible body, **characterised in that** the supporting strip (1, 27), via an entry opening (12, 24), is insertable into a supporting-strip receiver (11, 25, 25', 25") in a supporting part (10, 20, 20', 20") fastened to or formed on the body (23, 23'), up to a supporting position in which a retaining device (14, 29, 29', 42) secures the supporting strip (1, 27) against the supporting part (20, 20', 20") or the body (9) of the convertible.

2. A hood material fastening according to claim 1, **characterised in that** the cover material (2) is releasably or non-releasably connected to a fastening strip (4) which is insertable through an opening (5, 30) into a receiving chamber (6, 26) in the supporting strip (1, 27) and, after insertion, is connected to the supporting strip (1, 27).

3. A hood material fastening according to claim 1 or 2, **characterised in that** the retaining device comprises a resilient spring element (14) which can bear on one side against an abutment surface or edge of the supporting strip (1) and on the other side against a supporting surface or edge of the supporting part (16) or of the body (9), such that the elasticity or tension force of the spring element (14) biases the supporting strip (1) into the supporting position in the receiver (11).

4. A hood material fastening according to claim 3, **characterised in that** the spring element is a substantially C-shaped shackle or spring clip (14).

5. A hood material fastening according to any of claims 1 to 4, **characterised in that** the retaining device comprises a pin (40) which projects from the supporting strip (27) and, when in the supporting position, extends through a passage opening (41) in the supporting part (20"), and a separate locking (42) or bolt element or a said element adjustable on the support part (20") or on the strip or on the body, when in the supporting position, co-operates with the pin (40) and holds the supporting strip (27) in the supporting strip-receiver (25") in the support part (27).

6. A hood material fastening according to any of claims 1 to 5, **characterised in that** in the support position a bolt element or a resilient catch element (29, 29'), either separate or adjustable on the support strip or on the support part (20, 20') or on the body or the like, is adjustable or automatically adjusted in front of a shoulder on the other part, on the body or on the support part or the support strip (27) so that the support strip (27) is positively and/or non-positively secured in the receiver (25, 25') in the support part (20, 20').

7. A hood material fastening according to any of claims 1 to 6, **characterised in that** the entry opening (24) leads into a receiving chamber (25) in the body or in the support part (20), laterally bounded by at least one resilient side wall (31, 32).

8. A hood material fastening according to any of claims 1 to 7, **characterised in that** the entry opening leads into a supporting strip-receiver (25') in the body or in the support part (27), bounded by at least two components (36, 37) which are releasably or non-releasably connected to one another.

9. A hood material fastening according to any of claims 1 to 8, **characterised in that** the support strip (27) is U-shaped in plan view and the side limbs of the support strip (27) extend forward in the longitudinal direction of the convertible when in the support position.

10. A hood material fastening according to any of claims 1 to 9, **characterised in that** the support strip receiver (11, 25, 25', 25") in the support strip (1, 27) extends along the length of the support strip (1, 27), and the entry opening (12, 24) leading into the receiver (11, 25, 25', 25") is formed on the outside of the support strip (1, 27) remote from the passenger compartment.

11. A hood material fastening according to any of claims 1 to 10, **characterised in that** the opening (5, 30), in a side region of the support strip (1, 27), extends in the direction for tensioning the hood material (2), the fastening strip (4) can be brought into a sloping position relative to the direction of tensioning the hood material (2) when or before the support strip (1, 27) has been assembled, and after the fastening strip (4) has been adjusted in the receiver (6, 26) in the direction of tensioning the hood material (2), the fastening strip (4) cannot be removed from the receiver (6, 26) or not without difficulty.

## Revendications

1. Fixation de capote d'un véhicule convertible comportant une capote reliée ou à relier à un longeron d'appui se fixant à la carrosserie du véhicule,
**caractérisée en ce que**
le longeron d'appui (1, 27) s'engage par un orifice d'entrée (12, 24) dans un logement de longeron d'appui (11, 25, 25'; 25") d'une pièce d'appui (10, 20, 20', 20") fixée ou réalisée sur la carrosserie (23, 23') jusqu'à s'engager dans une position d'appui dans laquelle, une installation de fixation (14, 29, 29', 42) maintient le longeron d'appui (1, 27) par rapport à la pièce d'appui (20, 20', 20") ou la carrosserie (9) du véhicule convertible.

2. Fixation de capote selon la revendication 1,
**caractérisée en ce que**
la capote (2) est reliée de manière amovible ou solidaire à un longeron de fixation (4) est relié au longeron d'appui (1, 27) en étant engagé ou pouvant s'engager à travers un orifice d'enfichage (5, 30) dans un logement (6, 26) du longeron d'appui (1, 27).

3. Fixation de capote selon la revendication 1 ou 2,
**caractérisée en ce que**
l'installation de fixation comporte un élément de ressort élastique (14) qui s'appuie d'un côté contre une surface d'appui ou une arête d'appui du longeron d'appui (1) et de l'autre, contre une surface ou une arête d'appui de la pièce d'appui (16) ou de la carrosserie (9) et la force de serrage élastique de l'élément de ressort (14), sollicite le longeron d'appui (1) en position d'appui dans le logement du longeron d'appui (11).

4. Fixation de capote selon la revendication 3,
**caractérisée en ce que**
l'élément de ressort est un arceau à ressort (14) sensiblement en forme de C.

5. Fixation de capote selon l'une des revendications 1 à 4,
**caractérisée en ce que**
l'installation de fixation comporte un goujon (40) venant en saillie du longeron d'appui (27) et qui, en position d'appui, traverse un orifice (41) de la pièce d'appui (20") et maintient dans le logement de longeron d'appui (25") de la pièce d'appui (27), un élément d'enclipage (42) ou de verrouillage séparé ou monté sur la pièce d'appui (20") ou sur le longeron d'appui ou de manière réglable sur la carrosserie, en position d'appui avec le goujon (40) en coopérant avec le longeron d'appui (27).

6. Fixation de capote selon l'une des revendications 1 à 5,
**caractérisée en ce qu'**
en position d'appui, un élément de verrouillage ou un élément d'enclipage élastique (29, 29'), installé de manière réglable séparément ou sur le longeron d'appui ou sur la pièce d'appui (20, 20') ou sur la carrosserie ou analogue, est réglable ou se règle automatiquement devant un épaulement d'appui de l'autre pièce, la carrosserie ou la pièce d'appui ou le longeron d'appui (27) pour que le longeron d'appui (27) soit maintenu fixe dans le logement de longeron d'appui (25, 25') de la pièce d'appui (20, 20') par une liaison par la force et/ou par la forme.

7. Fixation de capote selon l'une des revendications 1 à 6,
**caractérisée en ce que**
l'orifice d'entrée (24) débouche dans un volume de réception (25) de la carrosserie ou dans la pièce d'appui (20) et ce volume est délimité latéralement par au moins une paroi latérale élastique (31, 32).

8. Fixation de capote selon l'une des revendications 1 à 7,
**caractérisée en ce que**
l'orifice d'entrée débouche dans un logement de longeron d'appui (25') de la carrosserie ou dans la pièce d'appui (27) en étant délimité par au moins deux composants (36, 37) reliés l'un à l'autre de manière solidaire ou amovible.

9. Fixation de capote selon l'une des revendications 1 à 8,
**caractérisée en ce qu'**
en vue de dessus, le longeron d'appui (27) a une forme de U et ses branches latérales sont dirigées vers l'avant en position d'appui dans la direction longitudinale du véhicule convertible.

10. Fixation de capote selon l'une des revendications 1 à 9,
**caractérisée en ce que**
le logement de longeron d'appui (11, 25, 25', 25") dans le longeron d'appui (1, 27) s'étend sur la longueur du longeron d'appui (1, 27) et l'orifice d'entrée (12, 24) débouchant dans le logement de longeron d'appui (11, 25, 25', 25") est réalisé sur le côté extérieur du longeron d'appui (1, 27) non tourné vers l'habitacle.

11. Fixation de capote selon l'une des revendications 1 à 10,
**caractérisée en ce que**
dans une zone latérale du longeron d'appui (1, 27), l'orifice d'enfichage (5, 30) présente une extension dans la direction de serrage de la capote (2) le longeron de fixation (4) s'introduit en position inclinée dans la direction opposée à la direction de serrage de la capote (2), lorsque le longeron d'appui (1, 27) est monté ou n'est pas encore monté dans le logement (6, 26), et il ne peut plus s'enlever ou seulement avec difficulté du logement (6, 26), après un mouvement de réglage du longeron de fixation (4) dans le logement (6, 26) dans la direction de tension de la capote (2).
